# EUROPEAN PATENT SPECIFICATION

(11) **EP 1 837 556 B1**
(45) Date of publication and mention of the grant of the patent: **02.05.2012**
(21) Application number: 06711480.1
(22) Date of filing: 06.01.2006
(51) Int. Cl.: F16H 25/22, F16H 25/24

(54) **BALL SCREW DEVICE**
KUGELROLLSPINDELVORRICHTUNG
DISPOSITIF DE VIS A BILLES

(30) Priority: 07.01.2005 JP 2005002589
(43) Date of publication of application: 26.09.2007
(73) Proprietor: NSK LTD., Shinagawa-ku, Tokyo 141-8560 (JP)
(72) Inventor: MINAKUCHI, Junji c/o NSK Precision Co., Ltd., Gunma 371-8527 (JP)
(74) Representative: Grünecker, Kinkeldey, Stockmair & Schwanhäusser
(86) International application number: PCT/JP2006/300096
(87) International publication number: WO 2006/073184

(56) References cited:
- EP-A1- 1 319 869
- DE-A1-102007 003 057
- JP-A- 03 104 514
- JP-A- 05 164 210
- JP-A- 2004 353 792
- JP-A- 2005 003 104
- US-A- 3 124 969
- US-A- 3 234 810
- US-A- 5 377 552

## Description

### [Technical Field]

The present invention relates to a method of manufacturing a ball screw device.

### [Background Art]

Recently, in a ball screw device used in a machine tool, in order to infinitely circulate balls that move rolling through a load rolling path, there are many cases where a return path of the ball is formed by a circulation tube, and a limitless circulation path of the ball is formed by the load rolling path and the return path. However, in the ball screw device in which the return path is formed by the circulation tube, the ball collides with a tongue formed on an end surface of the circulation tube at the time of picking up the ball from the load rolling path to the return path, and thus cause noisy sound or vibration.

As a ball screw device designed to solve the problem, for example, a device is disclosed in Patent Document 1. As shown in Fig. 3, the ball screw device includes a pair of end deflectors 6 formed on both ends of a nut 2, and is configured that the balls picked up from the load rolling path 8 by the end deflectors 6 is guided to a linear return path 10 formed in the nut 2, thereby circulating the balls infinitely. The ball screw device picks up the ball in a tangential direction of a screw shaft by the use of the end deflector 6 when the ball moves from the load rolling path 8 to the return path 10. With such a configuration, a collision force of the ball generated at a ball pickup portion of the end deflector 6 is reduced, and thus allows a high-speed operation and reduces noisy sound and vibration.
[Patent Document 1]
   Japanese Registered Utility Model No.3034052

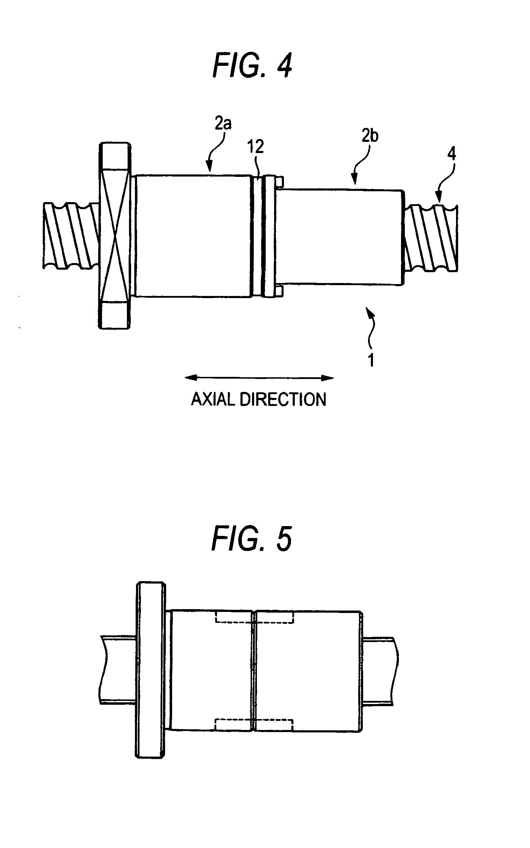

Additionally, in the ball screw device, there are many cases that a precompression is applied to the ball loaded into the load rolling path. A configuration is shown in Fig. 4 in which the precompression is applied to the ball loaded into the load rolling path. In the ball screw device 1, two nuts 2a and 2b are screwed together in one screw shaft 4. The nuts 2a and 2b are connected in an axial direction of the screw shaft 4, and a spacer 12 is disposed between the opposing end surfaces of the nuts 2a and 2b. A two-point contact precompression is applied to the ball loaded into the load rolling path by the spacer 12.

US 3 124 969 A discloses a ball screw device comprising a shaft having a ball rolling groove formed on the outer peripheral surface and a pair of nuts which are provided with a nut side ball rolling groove. Between the shaft side rolling grooves and the nut side rolling grooves, a number of balls are rolling so that the nuts are rotatably provided on the shaft. Both nuts are provided with a return path for returning the balls from one axial outer end of the nut to another axial outer end of the nut. The nut additionally comprises bores for receiving bolts which extend the outer end of nut. The end of the bolts extending the outer end of the nut is inserted into bores of the nut so that both nuts are non-rotatably connected. The nut additionally comprises springs which are provided inside the bore into which the bolts are inserted so that a preload onto the balls in the grooves is applied.

### [Disclosure of the Invention]

### [Problems that the Invention is to Solve]

However, in the ball screw device disclosed in Patent Document 1, when a ball is infinitely circulated, the balls are picked up from one of the pair of end deflectors 6, and the picked-up ball returns from the other of the pair of end deflectors 6 to the load rolling path 8 via the return path 10. For this reason, when the number of balls loaded into the load rolling path 8 is increased in order to increase load capacity of the ball screw device, the number of balls loaded during one circuit is increased. Accordingly, the competition between the balls becomes severe. As a result, the balls are likely to be blocked in the load rolling path 8 and thus deteriorate operability and durability of the ball screw device.

Further, in the ball screw device 1 shown in Fig. 4, the two-point precompression is applied to the balls loaded into the load rolling path by disposing the spacer 12 between the opposing end surfaces of the nut 2a and 2b. For this reason, an axial length of the nuts 2a and 2b connected to each other is increased compared with the case where a four-point precompression (oversize precompression) is applied to the balls loaded into the load rolling path, thereby increasing the size of the ball screw device 1.

The object of the present invention provide a method of manufacturing a compact ball screw device capable of improving load capacity, operability, and durability of the ball screw device without increasing the number of balls loaded into the load rolling path during one circuit.

### [Means for Solving the Problems]

In order to the aforementioned the present invention provides a method of manufacturing a ball screw device as defined in claim 1.

According to the invention, there is provided a method of manufacturing the ball screw device , wherein
the ball rolling groove is processed with the plurality of nuts connected to one another.
Then, a four-point contact precompression may be applied to the balls loaded into the load rolling path of the plurality of nuts in the same manner such that the four-point contact is applied to the balls loaded into the load rolling path of one nut, thereby improving productivity of the ball screw device.
Further, a collision force generated at a ball pickup portion of the end deflector is reduced since the plurality of balls moving rolling through the load rolling path at the time of operating the ball screw device are picked up from one end of the end deflector in the tangential direction of the screw shaft. Additionally, load capacity of the ball screw device can be improved without increasing the number of balls loaded into the load rolling path since the plurality of nuts having the end deflector are connected to one another in the axial direction of the screw shaft.
According to an embodiment of the ball screw device manifactured by the present invention a plurality of the nuts may be connected to one another along the center axis of the screw shaft so as to allow their opposed end surfaces to come into contact with each other. Therefore, it is possible to provide a compact ball screw device without increasing an axial length of the plurality of nuts connected to one another.
According to an other embodiment of the ball screw device manufactured by the present invention
an oversize ball having a diameter larger than that of the balls is disposed in the load rolling path so as to equivalently apply a four-point contact precompression to the plurality of balls loaded into the load rolling path.
According to this embodiment, the load capacity of the ball screw device can be improved without increasing the axial length of the plurality of nuts connected to one another.

### [Effects of the Invention]

The inventive method is capable of providing a compact ball screw device capable of improving load capacity, operability, and durability without increasing the number of balls loaded into a load rolling path during one circuit.

### [Best Mode for Carrying Out the Invention]

Hereinafter, an embodiment, which can be manufactured with the inventive method will be described by referring to the drawings. First, the embodiment will be described by referring to Fig. 1. Additionally, the same reference numerals will be used for the same configuration as those of Figs. 3 and 4. A ball screw device in accordance with the embodiment includes a screw shaft having a helical screw shaft-side ball rolling groove formed on an outer peripheral surface thereof, a nut having a nut-side ball rolling groove opposed to the helical screw shaft-side screw groove formed on an inner peripheral surface thereof, and a plurality of balls formed between both of the ball rolling grooves and loaded into a load rolling path so as to freely roll.

As in the same manner as a known ball screw device shown in Fig. 4, the nut includes an end deflector that picks up the ball moving in the load rolling path from one end of the end deflector in a tangential direction of the screw shaft and returns the picked-up ball from the other end of the end deflector to the load rolling path. The nut is configured to move in an axial direction through rolling of the balls caused by relatively rotating the nut with respect to the screw shaft.

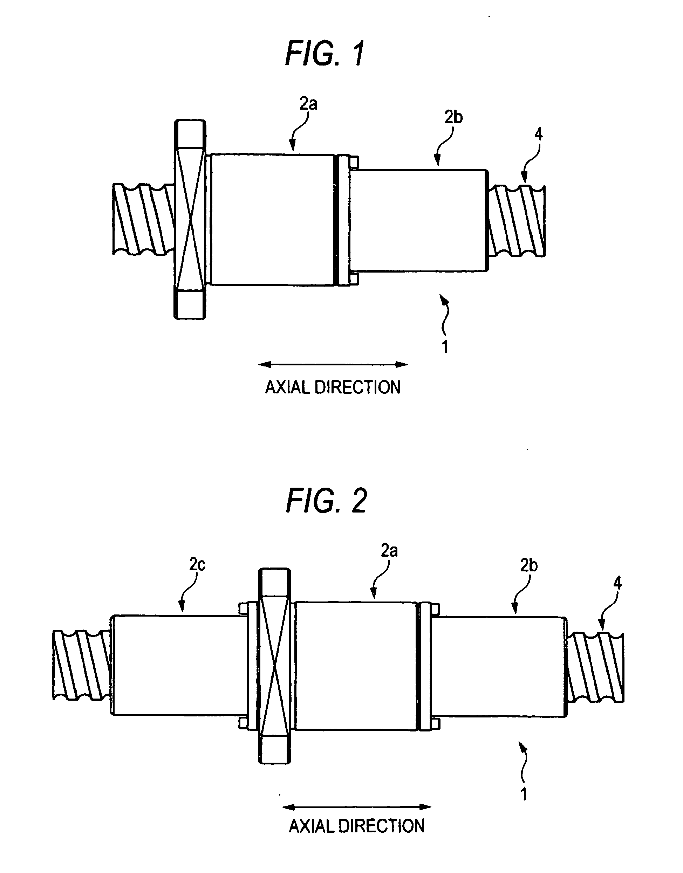

As shown in Fig. 1, in the ball screw device 1 of the embodiment manufactured by the presents invention, two nuts 2a and 2b are screwed together in one screw shaft 4, and the nuts 2a and 2b are connected to each other in the axial direction of the screw shaft 4 with their end surfaces come into contact with each other. In addition, an oversize ball having a larger diameter than that of the balls is disposed in one side of the load rolling path formed between the nuts 2a and 2b and the screw shaft 4. The oversize ball is disposed so as to equivalently apply a four-point contact precompression to the plurality of balls loaded into the load rolling path formed between the nuts 2a and 2b and the screw shaft 4.

Next, effects and advantages of the ball screw device 1 manufactured by the present invention including the aforementioned configuration will be described. When the nuts 2a and 2b move in the axial direction through rolling of the balls caused by relatively rotating the nuts 2a and 2b with respect to the screw shaft 4, the plurality of balls loaded into the load rolling path move rolling through the load rolling path. Additionally, the plurality of balls that move rolling through the load rolling path are picked up from one end of the end deflector in a tangential direction of the screw shaft 4, the balls move to the other end of the end deflector, and then the balls return from the other end of the end deflector to the load rolling path. That is, when the nuts 2a and 2b relatively rotate with respect to the screw shaft 4, the plurality of balls loaded into the load rolling path infinitely circulate in a limitless circulation path formed of the load rolling path and the end deflector.

Thus, according to the ball screw device 1 of the embodiment manufactured by the present invention, when the nuts 2a and 2b move in the axial direction through rolling of the balls caused by relatively rotating the nuts 2a and 2b with respect to the screw shaft 4, the balls that move rolling through the load rolling path are picked up from one end of the end deflector in the tangential direction of the screw shaft 4. For this reason, occurrences of a noisy sound and a vibration are reduced since a collision force of the balls caused from a ball pickup portion of the end deflector is reduced. Accordingly, a high-speed operation of the ball screw device 1 is possible, and durability and operability of the ball screw device 1 can be improved.

Additionally, load capacity of the ball screw device 1 manufactured by the present invention can be increased without increasing the number of balls loaded into the load rolling path during one circuit since the two nuts 2a and 2b are connected to each other in the axial direction of the screw shaft 4. Furthermore, a decrease in size of the ball screw device 1 is possible by preventing an axial length in which the nuts 2a and 2b are connected to each other from being increased since the end surfaces of the two nuts 2a and 2b are directly brought into contact with each other without using the spacer and the like in the axial direction of the screw shaft 4.

Moreover, productivity of the ball screw device 1 can be improved since the four-point contact precompression may be applied to the plurality of balls loaded into the load rolling path of the connected nuts 2a and 2b in the same manner such that the four-point contact precompression is applied to the plurality of balls loaded into the load rolling path of the one nut 2. In addition, in the ball screw device 1 in accordance with the embodiment manufactured by the present invention, although it is described about a case that the two nuts 2a and 2b are connected to each other, the embodiment manufactured by the present invention is not limited to the case, but may be configured such that three nuts 2a, 2b, and 2c are connected to one another as shown in Fig. 2. In this case, the load capacity of the ball screw device 1 is more improved. Further, four nuts or more may be connected to one another.

Although it is described about a case that a method of disposing the oversize ball having a diameter larger than that of the balls in the load rolling path is used in order to apply the four-point contact precompression to the plurality of balls loaded into the load rolling path, with the present invention a method of applying the four-point precompression thereto is not limited to the case. That is, for example, the method may be configured such that the four-point precompression is applied to the plurality of balls loaded into the load rolling path by processing the screw shaft-side ball rolling groove or the nut-side ball rolling groove to correspond to the diameter of the oversize ball after a diameter of the oversize ball is determined. Additionally, the method can be configured such that the four-point contact precompression is applied to the balls loaded into the load rolling path of a plurality of nuts by determining the nut-side ball rolling groove earlier than determining the diameter of the oversize ball with the plurality of nuts connected to one another. In this case, the load capacity the ball screw device can be improved without increasing the axial length of the connected plurality of nuts since the connected plurality of nuts can be considered as a unified one nut.

Further, the precompression applied to the plurality of balls loaded into the load rolling path is not limited to the four-point contact precompression, but may be a two-point contact precompression. In this case, the two-point contact precompression can be applied to the plurality of balls loaded into the load rolling path by using a method of applying the 2-point contact precompression that does not increase an axial length of the connected plurality of nuts, for example, a method of making a difference between leads of the screw shaft-side ball rolling groove and the nut-side ball rolling groove.

Fig. 5 is an example of a ball screw device manufactured by the present invention that two nuts are fitted to each other by using a positioning key without a flange. The positioning key is fixed to a side of the nut by a bolt and the like. With such a fixation, an outer diameter of the nut can be decreased.

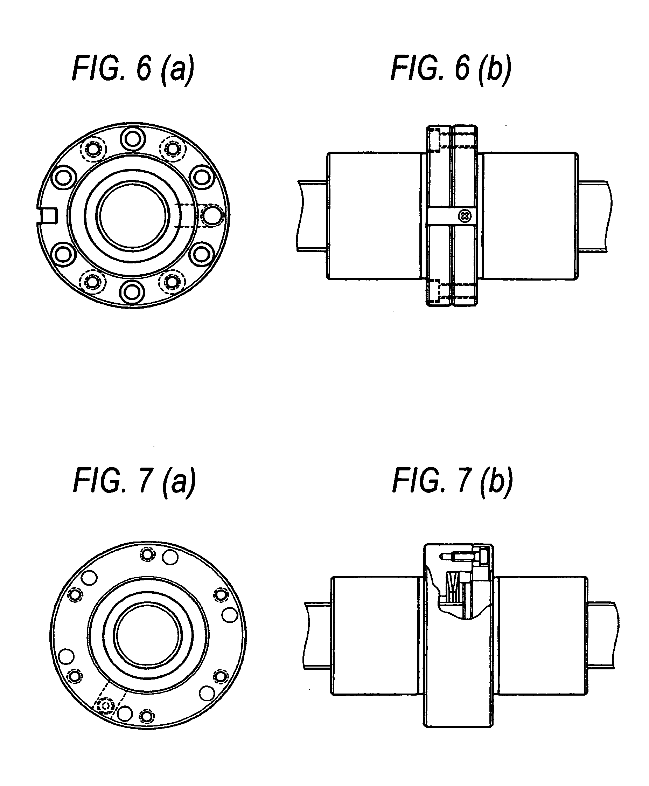

In addition, Fig. 6 is an example of a ball screw device manufactured by the present invention that flanges of two nuts are fitly fixed to each other. Fig. 6(a) is a diagram viewed in a vertical direction relative to the screw axial direction and Fig. 6(b) is a diagram viewed in a horizon direction relative to the screw axial direction, respectively. With such a fixation, rigidity in the axial direction of both nuts becomes uniform relative to the embodiment shown in Fig. 1 by disposing the flange for fixing the nut in the middle of two nuts, whereby a load applied to the nut-side ball rolling groove becomes uniform, thereby having high rigidity and a long lifetime.

Additionally, Fig. 7 is an example of a ball screw device manufactured by the present invention that a spring pressure is applied by inserting a disc spring between flanges of two nuts. Fig. 7(a) is a diagram viewed in a vertical direction relative to the screw axial direction and Fig. 7(b) is a diagram viewed in a horizontal direction relative to the screw axial direction, respectively. With such a fixation, each load applied to the balls more becomes uniform by absorbing slight phase errors of rolling grooves of the two nuts, thereby reducing the collision force between the balls due to the end deflector and becoming the ball screw device having a good operability.

### [Brief Description of the Drawings]

Fig. 1
   is a diagram showing a ball screw device manufactured in accordance with the method of the present invention.
[Fig. 2]
   Fig. 2 is a diagram showing a ball screw device of a modified example manufactured in accordance with the method of the present invention.
[Fig. 3]

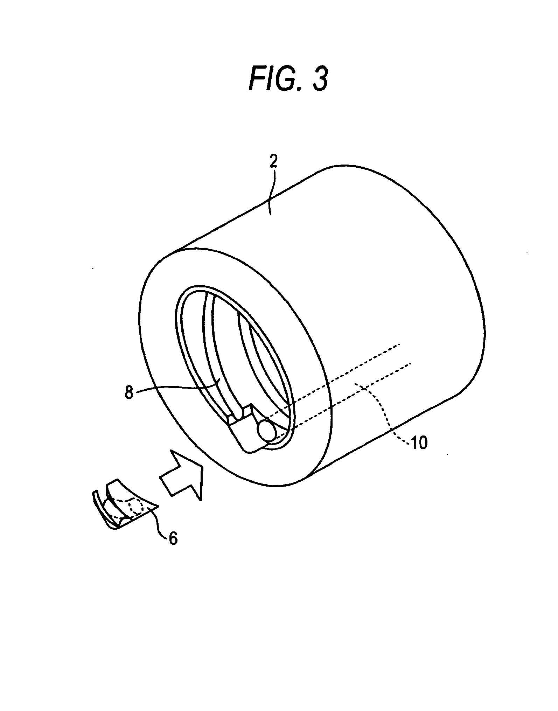

   Fig. 3 is a diagram showing a configuration of an end deflector provided to a known ball screw device.
[Fig. 4]
   Fig. 4 is a diagram showing the known ball screw device.
[Fig. 5]
   Fig. 5 is an example in which two nuts are fitted to each other by a positioning key without a flange.
[Fig. 6]
   Figs. 6 (a) and 6(b) is an embodiment of a ball screw device manufactured by the method of the present invention in which the two nuts are fitted to each other by the flange.
[Fig.7]
   Figs. 7 (a) and 7(b) is an embodiment of a ball screw device manufactured by the method of the present invention in which a spring pressure is applied by inserting a disc spring between flanges of the two nuts.

### [Description of Reference Numerals and Signs]

1: BALL SCREW DEVICE
2: NUT
4: SCREW SHAFT
6: END DEFLECTOR
8: LOAD ROLLING PATH
10: RETURN PATH
12: SPACER

## Claims

1. A method of manufacturing a ball screw device (1) comprising:
a screw shaft (4) which has a helical screw shaft-side ball rolling groove formed on an outer peripheral surface thereof;
a nut (2) which has a nut-side ball rolling groove, which is opposed to the screw shaft-side ball rolling groove, formed on an inner peripheral surface thereof; and
a plurality of balls which are loaded into a load rolling path (8) formed between both of the ball rolling grooves so as to freely roll, wherein
the nut (2) includes an end deflector (6) which picks up the balls moving in the load rolling path (8) from one end of the end deflector (6) in a tangential direction of the screw shaft (4) and which returns the picked-up balls from the other end thereof to the load rolling path (8), and
a plurality of the nuts (2) are connected to one another along the center axis of the screw shaft (4), which method is
**characterized in that**
the nut-side ball rolling groove is processed with the plurality of nuts (2) connected to one another.

## Patentansprüche

1. Verfahren zum Herstellen einer Kugelspindel-Vorrichtung (1), das umfasst:
eine Gewindespindel (4), die eine spiralförmige Gewindespindelseiten-Kugelrollnut aufweist, die an ihrer Außenumfangsfläche ausgebildet ist;
eine Mutter (2), die eine Mutternseiten-Kugelrollnut aufweist, die der Gewindespindelseiten-Kugelrollnut gegenüberliegt und an ihrer Innenumfangsfläche ausgebildet ist; und
eine Vielzahl von Kugeln, die in einen Last-Rollweg (8), der zwischen den beiden Kugelrollnuten ausgebildet ist, so eingesetzt sind, dass sie frei rollen, wobei
die Mutter (2) eine End-Umlenkeinrichtung (6) enthält, die die Kugeln, die sich in der Last-Rollnut (8) bewegen, über ein Ende der End-Umlenkeinrichtung (6) in einer Tangentialrichtung der Gewindespindel (4) aufnimmt und die aufgenommenen Kugeln über ihr anderes Ende auf den Last-Rollweg (8) zurückführt, und
eine Vielzahl der Muttern (2) entlang der Mittelachse der Gewindespindel (4) miteinander verbunden sind, und das Verfahren **dadurch gekennzeichnet ist, dass**
die Mutternseiten-Kugelrollnut so hergestellt wird, dass die Vielzahl von Muttern (2) dabei miteinander verbunden sind.

## Revendications

1. Procédé pour fabriquer un dispositif à vis à billes (1) comprenant :
une tige filetée (4) sur une surface périphérique extérieure de laquelle est formée une rainure hélicoïdale de roulement de billes côté tige filetée ;
un écrou (2) sur une surface périphérique intérieure duquel est formée une rainure de roulement de billes côté écrou qui fait face à la rainure de roulement de billes côté tige filetée ; et
plusieurs billes qui sont chargées dans un chemin de roulement de charge (8) formé entre les deux rainures de roulement de billes, de manière à rouler librement, étant précisé
que l'écrou (2) comprend un déflecteur d'extrémité (6) qui reçoit les billes se déplaçant dans le chemin de roulement de charge (8) à partir d'une extrémité du déflecteur d'extrémité (6) dans une direction tangentielle de la tige filetée (4) et qui renvoie vers le chemin de roulement (8) les billes reçues, à partir de son autre extrémité, et
que plusieurs écrous (2) sont reliés entre eux le long de l'axe médian de la tige filetée (4), le procédé étant
**caractérisé en ce que** la rainure de roulement de billes côté écrou est traité avec les écrous (2) reliés entre eux.
